Europäisches Patentamt

European Patent Office

Office européen des brevets

(11) Publication number: **0 210 614**
**A1**

## (12) EUROPEAN PATENT APPLICATION

(21) Application number: 86110323.2

(22) Date of filing: 25.07.86

(51) Int. Cl.4: **C04B 35/58** , C01B 21/068

(30) Priority: 01.08.85 US 761456

(43) Date of publication of application:
04.02.87 Bulletin 87/06

(84) Designated Contracting States:
DE FR GB IT NL SE

(71) Applicant: GTE LABORATORIES
INCORPORATED
100 West 10th Street
Wilmington, DE 19800(US)

(72) Inventor: Lieberman, Sheldon
34 Gedick Road Burlington
MA 01803(US)
Inventor: Trickett, Elizabeth
20 Francine Road Framingham
MA 01701(US)
Inventor: Su, Sophia R.
100 Hickory Road Weston
MA 02913(US)

(74) Representative: Patentanwälte Grünecker,
Kinkeldey, Stockmair & Partner
Maximilianstrasse 58
D-8000 München 22(DE)

(54) Process for making a homogeneous doped silicon nitride article.

(57) A process for making a homogeneous yttria-alumina doped silicon nitride article is described. A uniform coating of yttria and alumina is applied to the surface of silicon nitride particles by a chemical application of the hydroxides of yttrium and aluminum followed by drying and a subsequent conversion of the hydroxides to the corresponding oxides. The resulting powder is formed into an article and pressureless sintered to a density greater than 99% of theoretical.

EP 0 210 614 A1

# PROCESS FOR MAKING A HOMOGENEOUS DOPED SILICON NITRIDE ARTICLE

This invention relates to a method of making a ceramic article. More particularly, this invention relates to a method of making a silicon nitride article having homogeneously dispersed sintering additives.

A major problem in ceramic processing is the capability of manufacturing reproducible and reliable ceramic materials having the required properties suitable for high technology applications. This lack of reproducibility of material properties lies in the inability to control the development of specified microstructure, which for sintered materials depend on the characteristics of the starting powder, the green compact microstructure, and the sintering and coarsening processes. Although much significant work has been performed on the process which occurs during firing many researchers believe that the microstructure developed during sintering is determined to a large extend by the powder characteristics and the green microstructure. Therefore, the key factor to stronger and more reliable ceramics lies in new processing techniques that would result in fewer of the flaws and voids that lead to failure.

In accordance with the present invention, a new and improved process for making a silicon nitride article having homogeneously dispersed sintering additives comprises the following steps:

Step 1 - Silicon nitride particles are dispersed in a solution of sintering additives to form a silicon nitride, sintering additive slurry.

Step 2 - Ammonium hydroxide solution is added to the silicon nitride, sintering additive slurry to form a gel.

Step 3 - The product from step 2 is filtered.

Step 4 - The product from step 3 is washed with water.

Step 5 - The produce from step 4 is dried.

Step 6 - The produce from step 5 is calcined at a temperature sufficient to convert the sintering additives to sintering additive oxides.

Step 7 - The produce from step 6 is formed into a silicon nitride article.

Step 8 - The product from step 7 is pressureless sintered at a temperature sufficient to form a densified silicon nitride article having a density greater than 99 percent of theoretical density.

This invention is focused on processing two $Si_3N_4$ based alloys of formulation 6 w/o $Y_2O_3$ designated as $PY_6$ and 6 w/o $Y_2O_3$ and 2 w/o $Al_2O_3$ designated as AY6. This processing technique can be applied to other systems in which oxides are used as sintering additives.

A) Powder Processing

Colloidal Dispersion

This method is based on the precipitation of aluminum hydroxide and yttrium hydroxide from its corresponding nitrate solution onto dispersed $Si_3N_4$ particles.

Example : Preparation of AY6 Powder

50.89 of premilled silicon nitride powder were dispersed in 99.6ml of deionized water and 0.4g of ammonium citrate to form a slurry. 25ml of a yttrium nitrate stock solution and 25ml of a aluminum nitrate stock solution were added to the above slurry. The stock solutions were prepared to provide 3.319g of $Y_2O_3$ as the nitrate and 1.106g of $Al_2O_3$ as the nitrate. The total volume was increased to 200ml with deionized water and the slurry was homogenized using an ultrasonic cell disruptor for 30 minutes. IN $NH_4OH$ was added dropwise to precipitate the hydroxides of yttrium and aluminum. The final pH was 9.0. The final slurry was filtered and washed with deionized water to remove soluble nitrates. The washed filter cake was dried at 110°C overnight. The dried cake was ball milled 24 hrs. using $Si_3N_4$ milling media. The resulting powder was calcined at 400 to 500°C to decompose the hydroxides to their corresponding oxides. The morphology of the powder was analyzed by STEM chemical imaging technique. The results indicate that each $Si_3N_4$ particulate was homogeneously coated by sintering additives of oxides. The oxide coating was generally localized on the edge of $Si_3N_4$ particles. The same powder morphology was obtained by partially precipitating out $Al(OH)_3$ and $Y(OH)_3$ from their corresponding nitrates solution by adjusting the pH of $Si_3N_4$ dispersion to 7.5 to 8.0, followed by calcination at 450°C for 4 hrs.

Example: Preparation of PY6 Powders

100 gr. of premilled silicon nitride powder (lot SN66) was dispersed in 250 ml of 1N $NH_4OH$, the mixture was sonicated for 15 minutes 46.4ml of stock yttrium nitrate solution provided 6.38 grams of $Y_2O_3$ was added to the $Si_3N_4$ dispersion and was further sonicated for another 15 minutes to ensure homogeneous mixing. The pH of the gelatinous slurry was 9.5 The slurry was diluted with deionized H20 to 800ml to reduce the viscosity prior to the spray drying process. The diluted slurry was

spray dried at 190° to 200°C at feed rate of 200ml/hr. The powder was then calcined at 450°C for 3 hrs. The chemical analysis of the powder by Ion Coupling plasma technique shows 5.97 w/o of $Y_2O_3$.

The calcined powders were pressed into small pellets 1.25 cm in diameter, at 210 MNm$^{-2}$ (30,000 psig) in WC dies or isostatically pressed at 170MNm$^{-2}$ (25,000 psig). The pressed article had a green density of about 65% to 67% of theoretical.

The pressed articles of AY6 and PY6 were then sintered at about 1760°C for AY6 and 1860°C for PY6 using a 200 psi $N_2$ overpressure, as compared to conventionally processed powders which have to be sintered at 1850°C for AY6 and 1900 to 1950°C for PY6. The sintering schedule began by heating to 1400°C and holding at that temperature for 1 hour followed by further heating to 1760°C and holding at that temperature for 2 hours followed by cooling to room temperature. The resulting articles had a density greater than 99% of theoretical.

While there has been shown and described what is at present considered the preferred embodiment of the invention, it will be obvious to those skilled in the art that various changes and modifications may be made therein without departing from the scope of the invention as defined by the appended claims.

## Claims

1. A process for making a densified silicon nitride article comprising

Step 1 -dispersing silicon nitride particles in a solution of sintering additives to from a silicon nitride, sintering additive slurry;

Step 2 -adding an ammonium hydroxide solution to said silicon nitride, sintering additive slurry to form a gel;

Step 3 -filtering the product from step 2;

Step 4 -washing the product from step 3 with water;

Step 5 -drying the product from step 4;

Step 6 -calcining the product from step 5 at a temperature sufficient to convert the sintering additives to sintering additive oxides;

Step 7 -forming a silicon nitride article from the product of step 6; and

Step 8 -pressureless sintering the product from step 7 at a temperature sufficient to form a densified silicon nitride article having a density greater than 99 percent of theoretical density.

## DOCUMENTS CONSIDERED TO BE RELEVANT

EP 86110323.2

| Category | Citation of document with indication, where appropriate, of relevant passages | Relevant to claim | CLASSIFICATION OF THE APPLICATION (Int. Cl.4) |
|---|---|---|---|
| A | JP - A2 - 53-12 910 (NGK INSULA-TORS KK) <br><br> * Totality * <br><br> ---- | 1 | C 04 B 35/58 <br> C 01 B 21/068 |

TECHNICAL FIELDS
SEARCHED (Int. Cl.4)

C 04 B
C 01 B

The present search report has been drawn up for all claims

| Place of search | Date of completion of the search | Examiner |
|---|---|---|
| VIENNA | 31-10-1986 | BECK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82